Europäisches Patentamt

European Patent Office

Office européen des brevets

(19)

(11) **EP 1 513 276 A2**

(12) **EUROPÄISCHE PATENTANMELDUNG**

(43) Veröffentlichungstag:
**09.03.2005 Patentblatt 2005/10**

(51) Int Cl.⁷: **H04B 17/00**, H04B 1/04

(21) Anmeldenummer: **04101313.7**

(22) Anmeldetag: **31.03.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL LT LV MK**

(30) Priorität: **04.09.2003 DE 10340808**

(71) Anmelder: **SIEMENS AKTIENGESELLSCHAFT**
**80333 München (DE)**

(72) Erfinder: **Langer, Andreas**
**85716, Unterschlei heim-Lohhof (DE)**

(54) **Verfahren zum Betrieb und eine Schaltungsanordnung eines Leistungsverstärkers in einem Mobilfunkendgerät**

(57) Die Erfindung betrifft ein Verfahren zum Betrieb eines Leistungsverstärkers (1) in einem Mobilfunkendgerät und eine Schaltungsanordnung eines Leistungsverstärkers (1) in einem Mobilfunkendgerät, bei dem/der der Leistungsverstärker (1) Signale (1.3) an ein Frontend (8) und eine Antenne (10) sendet, wobei bei Fehlanpassungen der Antenne (10) die Signale zumindest teilweise reflektiert (1.4) werden.

Die Erfindung zeichnet sich dadurch aus, dass durch mindesten einen Koppler (3) die vom Leistungsverstärker (1) gesendeten (1.3) und von der Antenne (10) reflektierten Signale (1.4) ausgekoppelt werden und dann mit mindestens einem Mittel (3.3, 3.4 und 5) demoduliert werden, wodurch die Lastimpedanz oder eine damit zusammenhängende Größe nach Betrag und Phase bestimmt wird.

FIG 1

EP 1 513 276 A2

**Beschreibung**

Die Erfindung betrifft ein Verfahren zum Betrieb eines Leistungsverstärkers in einem Mobilfunkendgerät und eine Schaltungsanordnung eines Leistungsverstärkers in einem Mobilfunkendgerät, bei dem/der der Leistungsverstärker Signale an ein Frontend und eine Antenne sendet, wobei bei Fehlanpassungen der Antenne die Signale zumindest teilweise reflektiert werden.

Leistungsverstärker (PA) in Mobilfunkendgeräten zeigen eine Abhängigkeit der Ausgangsleistung, der Stromaufnahme und auch der Nachbarkanalleistung von der Lastimpedanz, die sich am Ausgang des Leistungsverstärkers befindet.

Die Lastimpedanz am Ausgang eines Leistungsverstärkers in einem Mobilfunkendgerät wird im wesentlichen durch das Frontend und die Antenne bestimmt. Das Frontend verbindet die verschiedenen RX- und die TX-Pfade mit der Antenne. Durch die Antenne ergibt es sich, dass sich die Lastimpedanz des Leistungsverstärkers in Abhängigkeit der Umgebungsbedingungen der Antenne, zum Beispiel Abstrahlung in den freien Raum oder Abstrahlung bei abgedeckter Antenne, ändern kann.

Aufgrund der fortschreitenden Miniaturisierung der Mobilfunkendgeräte wird auch das Antennenvolumen immer weiter reduziert. Gleichzeitig sollen jedoch immer mehr Frequenzbänder abgedeckt werden, das heißt eine größere Bandbreite bei immer kleinerem Antennenvolumen. Die Folge ist, dass die Antenne immer schlechter angepasst ist und insbesondere bei Fehlanpassung sehr große VSWR-Werte (Voltage Standing Wave Ratio) auftreten können. Dabei ist der VSWR-Wert ein Maß für die Fehlanpassung. Je größer der VSWR-Wert desto stärker die Fehlanpassung. Ein VSWR-Wert von 1 bedeutet perfekte Anpassung.

Bei Systemen mit konstanter Einhüllenden, zum Beispiel bei GMSK, kann die Fehlanpassung zu einer erhöhten Stromaufnahme oder einer Reduktion der abgestrahlten Leistung infolge Reflektion an der fehlangepassten Antenne und infolge Load Pulling des Leistungsverstärkers führen.

Bei Systemen mit nichtkonstanter Einhüllenden, zum Beispiel bei HPSK bei UMTS, wird bei Fehlanpassung zusätzlich die Nachbarkanalleistung das ACLR beziehungsweise die ACP erhöht. Diese Erhöhung der Nachbarkanalleistung infolge der durch die Fehlanpassung auftretenden nichtlineare Effekte, auch spectral regrowth genannt, ist jedoch unerwünscht, da dadurch andere Mobilfunkteilnehmer gestört werden können. Für die maximale Nachbarkanalleistung existieren in den Mobilfunkstandards genau definierte Anforderungen, zum Beispiel ACLR bei UMTS. Um eine Erhöhung der Nachbarkanalleistung unter Fehlanpassung zu verhindern, werden in solchen Systemen bisher überwiegend Isolatoren eingesetzt.

Bisher wird in den bekannten Systemen die Leistung der rücklaufenden Welle gemessen, die infolge der Reflektion an einer fehlangepassten Antenne auftritt. Danach werden Parameter des Leistungsverstärkers, wie zum Beispiel die Ausgangsleistung oder die Stromaufnahme, angepasst. Die Anpassung dieser Leistungsverstärkergrößen ist aber aufgrund der unbekannten Phase der Lastimpedanz nicht optimal, da beispielsweise bei Fehlanpassung der Strom nicht ansteigen muss, sondern auch abnehmen kann. Ist nur der Betrag der rücklaufenden Welle bekannt und soll die Stromaufnahme des Leistungsverstärkers anhand der Auswertung der rücklaufenden Welle durch Reduktion der Ausgangsleistung begrenzt werden, so wird je nach Phase der Lastimpedanz, die aufgrund der Messung der Leistung der rücklaufenden Welle unbekannt ist, die Leistung auch reduziert, wenn der Strom infolge Fehlanpassung abnimmt. Dies kann dazu führen, dass bei schlechtem Empfang durch die Basisstation das Gespräch unterbrochen wird.

Es ist daher Aufgabe der Erfindung, ein verbessertes Verfahren zum Betrieb eines Leistungsverstärkers in einem Mobilfunkendgerät und eine verbesserte Schaltungsanordnung eines Leistungsverstärkers in einem Mobilfunkendgerät vorzustellen, durch das/die es möglich ist die momentane Lastimpedanz am Ausgang des Leistungsverstärkers nach Betrag und Phase zu bestimmen.

Diese Aufgabe wird durch die Merkmale des unabhängigen Verfahrensanspruches 1 und gegenständlich durch den Vorrichtungsanspruch 8 gelöst. Vorteilhafte Weiterbildungen der Erfindung sind Gegenstand untergeordneter Patentansprüche.

Der Erfinder hat erkannt, dass die zuvor beschriebenen Effekte der Fehlanpassung der Antenne besser kontrolliert werden können, wenn die momentane Lastimpedanz nach Betrag und Phase bekannt ist. Ist die Lastimpedanz bekannt, so kann beispielsweise gezielt das Leistungsverstärkermatching (Anpassung des Leistungsverstärkers), im Fall eines adaptiven Leistungsverstärkermatching oder das Antennenmatching, bei einem adaptiven Antennenmatching, angepasst werden. Bei Systemen mit nichtkonstanter Einhüllenden ist neben einer Änderung der Ausgangsanpassung des Verstärkers für den Fall eines schaltbaren Leistungsverstärkermatchings auch eine Reduktion der Ausgangsleistung bei den kritischen Lastzuständen des Leistungsverstärkers denkbar, damit die systemspezifischen Anforderungen hinsichtlich Nachbarkanalleistung auch bei Fehlanpassung erfüllt werden.

Entsprechend diesem allgemeinen Erfindungsgedanken schlägt der Erfinder vor, das Verfahren zum Betrieb eines Leistungsverstärkers in einem Mobilfunkendgerät, bei dem der Leistungsverstärker Signale an ein Frontend und eine Antenne sendet, wobei bei Fehlanpassungen der Antenne die Signale zumindest teilweise reflektiert werden, dahingehend zu verbessern, dass die gesendeten und die reflektierten Signale ausgekoppelt und demoduliert werden und daraus die Lastimpedanz nach Betrag und Phase bestimmt wird.

Durch das neue Verfahren ist es auch möglich, den Reflexionsfaktor nach Betrag und Phase zu bestimmen.

In bisher bekannten Verfahren wurden Betrag und Phase des Reflexionsfaktors der Last eines Leistungsverstärkers nicht zusammen bestimmt. Üblicherweise wird nur der Betrag oder eine davon abhängige Größe, beispielsweise durch Messung der Leistung der rücklaufenden beziehungsweise reflektierten Signale, bestimmt. Hierdurch konnte der Leistungsverstärker zum Beispiel bei fehlangepasster Antenne nicht optimal angepasst werden.

Aber gerade bei Fehlanpassungen der Antenne haben Betrag und Phase gleichermaßen einen Einfluss auf die Ausgangsleistung, die Stromaufnahme oder auch Nachbarkanalleistung des Leistungsverstärkers. Durch das neue Verfahren, das die Lastimpedanz nach Betrag und Phase bestimmt, lässt sich die Performance des Leistungsverstärkers erheblich verbessern.

Es ist günstig, wenn die gesendeten und die reflektierten Signale nacheinander demoduliert werden, wobei der Pfad des gerade nicht zu demodulierenden Signals reflektionsfrei abgeschlossen wird. Bei dieser Durchführung des Verfahren, ist nur eine Messvorrichtung, zum Beispiel ein Empfänger zur Demodulation der Signale, notwendig. Da es nur auf das Verhältnis der hin- und rücklaufenden Welle ankommt, spielen eventuelle Skalierungsfehler in der Amplitude oder eventuelle Phasenoffsets keine Rolle. Bei Benutzung nur einer Messvorrichtung können Hardwarekomponenten eingespart werden. An dieser Stelle sei erwähnt, das es auch im Rahmen der Erfindung liegt, dass die gesendeten und die reflektierten Signale gleichzeitig durch zum Beispiel zwei Empfänger demoduliert werden können.

Vorteilhaft ist es, wenn die Lastimpedanz aus den ausgekoppelten gesendeten und reflektierten Signalen berechnet wird. Hierdurch wird die genaue und momentan am Ausgang des Leistungsverstärkers anliegende Lastimpedanz ermittelt, wodurch der Leistungsverstärker gezielt angepasst werden kann.

Alternativ zur Berechnung der Lastimpedanz, können Signalwerte der ausgekoppelten gesendeten und reflektierten Signale mit tabellarisch hinterlegten Werten verglichen werden und durch den Vergleich die Lastimpedanz bestimmt werden.

Durch das Verfahren ist es nun besonders einfach möglich, Parameter des Leistungsverstärkers in Abhängigkeit der bestimmten oder berechneten Lastimpedanz anzupassen. Beispielsweise kann die Sendeleistung unter Antennenfehlanpassung reduziert werden, damit die Stromaufnahme unter Antennenfehlanpassung verringert wird, wodurch die Standby-Zeit oder die Sprechzeit des Mobilfunkendgerätes insgesamt entsprechend verlängert wird. Aber auch die Nachbarkanalleistung (ACLR), die zu einer unerwünschten Störung andere Mobilfunkteilnehmer führen kann, ist nun durch die bestimmte Maßnahme, wie Verringerung der Leistung oder Änderung des Leistungsverstärker- und/ oder Antennenmatchings oder Änderung der Biaseinstellungen des Verstärkers in definierter Weise, beeinflussbar.

Durch das neue Verfahren ist es weiterhin möglich, Parameter der Antenne in Abhängigkeit der bestimmten oder berechneten Lastimpedanz anzupassen. Bei schaltbarem Antennenmatching, zum Beispiel über ein Antennenanpassnetzwerk, welches die Impedanz der Antenne auf einen anderen vorteilhaften Wert transformieren kann, ist es erreichbar, die Empfindlichkeit des Sendesignalempfängers zu erhöhen. Außerdem ist es möglich, nun die Antennenvolumina zu verkleinern, da die daraus resultierende schlechtere Anpassung vorallem bei mehreren Frequenzbereichen, durch das Anpassen der Antenne kompensiert werden kann.

Entsprechend dem Verfahren schlägt der Erfinder auch vor, die bekannte Schaltungsanordnung eines Leistungsverstärkers in einem Mobilfunkendgerät, mindestens bestehend aus einem Leistungsverstärker, einem Frontend und einer Antenne, wobei das Frontend und die Antenne die Lastimpedanz am Ausgang des Leistungsverstärkers ergeben, ein Signalaustausch zwischen Leitungsverstärker und Antenne stattfindet und bei Fehlanpassungen der Antenne die vom Leistungsverstärker gesendeten Signale von der Antenne zumindest teilweise reflektiert werden, dahingehend zu verbessern, dass mindestens ein Koppler zwischen Ausgang des Leistungsverstärkers und Antenne angeordnet ist, der die gesendeten und die reflektierten Signale ausgekoppelt und mindestens ein Mittel angeordnet ist, das eine Demodulation der ausgekoppelten Signale durchführt, wodurch die Lastimpedanz oder der Reflexionsfaktor nach Betrag und Phase bestimmt werden kann.

Da nun durch die neue Schaltungsanordnung die Lastimpedanz und analog zum Verfahren auch der Reflexionsfaktor nach Betrag und Phase bestimmt werden kann, lässt sich die Performance des Leistungsverstärkers genauer und gezielter verbessern.

Es ist günstig, wenn ein Empfänger zur Demodulation der gesendeten Signale und ein Empfänger zur Demodulation der reflektierten Signale angeordnet ist. Die beiden Signale können nun gleichzeitig demoduliert werden. Der erhöhte Aufwand an Hardware, wird durch ein schnelles Messergebnis ausgeglichen.

Alternativ dazu, ist es aber auch möglich, dass in der Schaltungsanordnung genau ein Empfänger angeordnet ist und zwischen dem einen Empfänger und dem Koppler ein Schalter angeordnet ist, der die ausgekoppelten gesendeten und reflektierten Signale nacheinander an den Empfänger weiterleitet, wobei der Pfad des gerade nicht zu demodulierenden Signals reflektionsfrei abgeschlossen wird.

Vorteilhaft ist es, wenn eine Auswerteeinheit angeordnet ist, die die Lastimpedanz aus den ausgekoppelten gesendeten und reflektierten Signale berechnet. Hierdurch ist die genaue und momentan am Ausgang des Leistungsverstärkers anliegende Lastimpedanz bekannt, wodurch der Leistungsverstärker gezielt angepasst werden kann.

Alternativ zur Berechnung ist es auch vorgesehen, eine Look-Up-Tabelle in der Schaltungsanordnung zu integrieren, in der Werte hinterlegt sind, die mit den Signalwerten der ausgekoppelten gesendeten und reflektierten Signale verglichen werden und dadurch die Lastimpedanz bestimmt wird.

Günstig ist es, wenn in der Schaltungsanordnung ein schaltbares Anpassnetzwerk angeordnet ist, dass die verschiedenen Parameter des Leistungsverstärkers in Abhängigkeit der bestimmten oder berechneten Lastimpedanz anpasst. Beispielsweise kann dadurch die Sendeleistung unter Antennenfehlanpassung verbessert werden. Außerdem kann die Stromaufnahme des Leistungsverstärkers unter Antennenfehlanpassung verringert werden, wodurch insgesamt die Standby-Zeit oder die Sprechzeit des Mobilfunkendgerätes entsprechend verlängert wird. Aber auch die Nachbarkanalleistung (ACLR), die zu einer unerwünschten Störung andere Mobilfunkteilnehmer führen kann, ist nun in definierter Weise beeinflussbar.

Aber auch Parameter der Antenne können in Abhängigkeit der bestimmten oder berechneten Lastimpedanz durch eine schaltbare Antennenanpassung beziehungsweise ein schaltbares Anpassnetzwerk angepasst werden. Bei schaltbarem Antennenmatching, zum Beispiel über ein Antenneanpassnetzwerk, welches die berechnete oder bestimmte Antennenimpedanz auf einen von der Charakteristik des Leistungsverstärkers oder Empfängers abhängigen vorteilhaften Wert transformiert, ist es möglich die Empfindlichkeit des Sendesignalempfängers zu erhöhen. Außerdem ist es möglich nun die Antennenvolumina zu verkleinern, da die daraus resultierende schlechtere Anpassung, vorallem bei mehreren Frequenzbereichen, durch das Anpassen der Antenne kompensiert werden kann.

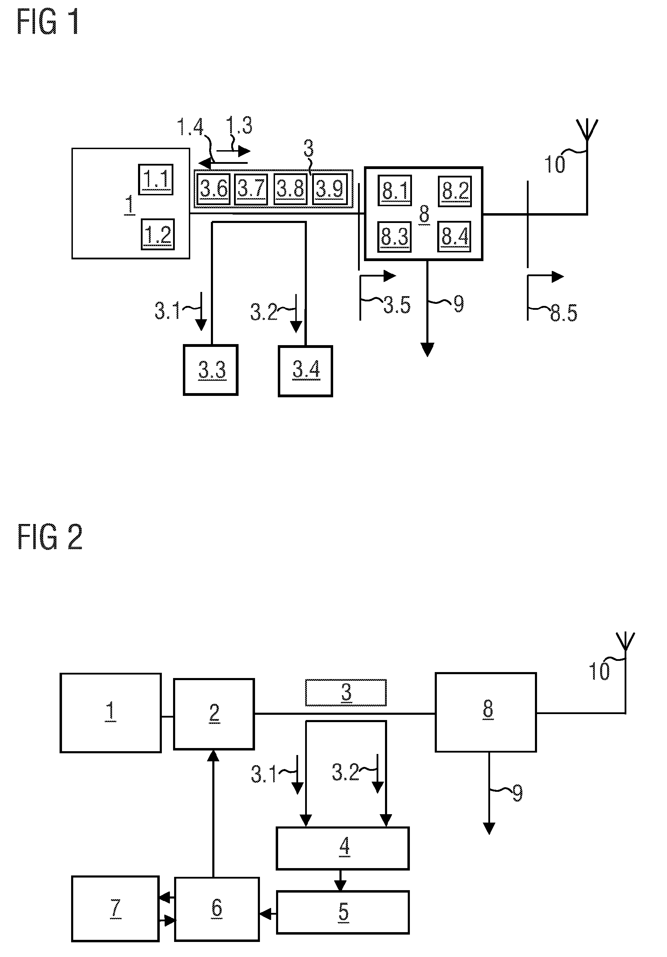

Im Folgenden wird die Erfindung anhand bevorzugter Ausführungsbeispiele mit Hilfe der Figuren 1 bis 4 beschrieben, wobei in den Figuren die folgenden Abkürzungen verwendet werden: 1: Leistungsverstärker PA; 1.1: Quellwelle $b_S$; 1.2: Quellreflektionsfaktor $\Gamma_S$; 1.3: Aus dem Leistungsverstärker auslaufende Welle $b_1$; 1.4: Einlaufende Welle $a_1$; 2: Schaltbare Leistungsverstärkeranpassung; 3: Koppler; 3.1: Ausgekoppelte hinlaufende Welle $b_3$; 3.2: Ausgekoppelte rücklaufende Welle $b_4$; 3.3: Messeinrichtung für hinlaufende Welle; 3.4: Messeinrichtung für rücklaufende Welle; 3.5: Reflektionsfaktor $\Gamma'_L$ am Ausgang des Kopplers; 3.6: Koppelfaktor $a_k'$ für die hinlaufende Welle; 3.7: Koppelfaktor $a_k''$ für die rücklaufende Welle; 3.8: Isolation $a_l'$ für den Pfad der hinlaufenden Welle; 3.9: Isolation $a_l''$ für den Pfad der rücklaufenden Welle; 4: Schalter; 5: Zweiter Empfänger; 6: Auswerteeinheit; 7: Look-Up-Tabelle; 8: Frontend/Frontendmodul; 8.1: Eingangsreflektionsfaktor $s_{11}$ des Frontend; 8.2: Transmissionsfaktoren $s_{12}$ des Frontend; 8.3: Transmissionsfaktoren $s_{21}$ des Frontend; 8.4: Ausgangsreflektionsfaktor $s_{22}$ des Frontend; 8.5: Reflektionsfaktor $\Gamma_L$; 9: Anschluss zum ersten Empfänger 10: Antenne; 11: Schaltbare Antennenanpassung.

Die Figuren zeigen im Einzelnen:

Figur 1: Prinzipskizze, die das Verfahren zur Messung der Lastimpedanz am Ausgang eines Leistungsverstärkers verdeutlicht;

Figur 2: Schaltungsanordnung zur Messung der Lastimpedanz am Ausgang eines Leistungsverstärkers;

Figur 3: Weitere Ausführung einer Schaltungsanordnung zur Messung der Lastimpedanz am Ausgang eines Leistungsverstärkers, bei der die Messstelle der Lastimpedanz zwischen Ausgang des Leistungsverstärkers und schaltbarer Leistungsverstärkeranpassung angeordnet ist;

Figur 4: Weitere Ausführung einer Schaltungsanordnung zur Messung der Lastimpedanz am Ausgang eines Leistungsverstärkers, bei der die Messstelle der Lastimpedanz zwischen Frontend und schaltbarer Antennenanpassung angeordnet ist.

Die Figur 1 zeigt eine Prinzipskizze, die das Verfahren zur Messung der Lastimpedanz am Ausgang eines Leistungsverstärkers 1 verdeutlicht. Die Prinzipskizze zeigt im wesentlichen einem Leistungsverstärker 1, der am Ausgang verstärkte Signale an eine Antenne 10 ausgibt. Zwischen Antenne 10 und Leistungsverstärker 1 ist noch ein Frontendmodul 8 angeordnet, welches die TX- und RX-Pfade mit der Antenne 10 verbindet. Beispielhaft ist am Frontend 8 der Anschluss 9 zum ersten Empfänger dargestellt. An den ersten Empfänger werden die Signale weitergeleitet, die die Antenne 10 empfängt. Das Frontend 8 und die Antenne 10 ergeben am Ausgang des Leistungsverstärkers 1 eine Lastimpedanz, die durch das Verfahren gemessen werden soll.

Die Bestimmung der Lastimpedanz am Ausgang des Leistungsverstärkers 1 ist wichtig, da die Sendequalität von der Lastimpedanz abhängt. Beispielsweise führt eine fehlangepasste Antenne zu unerwünschten Signalreflektionen an der Antenne 10 selbst.

Im neuen Verfahren werden die vom Leistungsverstärker 1 gesendeten und die zum Beispiel von einer fehlangepassten Antenne reflektierten Signale gemessen und daraus die Lastimpedanz nach Betrag und Phase bestimmt. Um diese beiden Signale messen zu können, werden diese zwischen Frontend 8 und Ausgang des Leistungsverstärkers 1 mit einem Koppler 3 ausgekoppelt.

Die Komponenten der Prinzipskizze sollen im folgenden mathematisch modelliert werden:

Der Leistungsverstärker 1 wird durch eine Quellwelle $b_s$ 1.1 und einen Quellreflektionsfaktor $\Gamma_s$ 1.2 modelliert. Am Ausgang des Leistungsverstärkers 1 läuft die Welle $b_1$ 1.3 aus und die reflektierte Welle $a_1$ 1.4 ein.

Der Koppler 3 wird durch die Koppelfaktoren $a_k'$ 3.6, der für die hinlaufende Welle steht, $a_k''$ 3.7, der für die rücklaufende Welle steht, und die Isolationsfaktoren $a_I'$ 3.8 für den Pfad der hinlaufenden Welle und $a_I''$ 3.9 für den Pfad der rücklaufenden Welle, modelliert.

Das Frontend 8 wird durch den Eingangsreflektionsfaktor $s_{11}$ 8.1, die Transmissionsfaktoren $s_{12}$ und $S_{21}$ 8.2 und 8.3 und den Ausgangsreflektionsfaktor $s_{22}$ 8.4 modelliert.

Bei den nachfolgenden Rechenschritten wurden folgende Annahmen vorgenommen:

- Die Messeinrichtungen 3.3 und 3.4 für hin- und rücklaufende Welle sind reflektionsfrei abgeschlossen.

- Die Einfügedämpfung des Kopplers 3 wurde vernachlässigt. Durch diese Vernachlässigung vereinfacht sich die Rechnung.

- Alle Wellengrößen werden komplex angesetzt.

Unter diesen Annahmen ergibt sich für den Reflektionsfaktor $\Gamma'_L$ 3.5 am Ausgang des Kopplers 3:

$$\Gamma'_L = s_{11} + \frac{s_{12}s_{21}\Gamma_L}{1 - s_{22}\Gamma_L} \qquad \text{Gleichung 1}$$

Für die aus dem Leistungsverstärker 1 auslaufende Welle $b_1$ 1.1 und die rücklaufende Welle $a_1$ 1.2, ausgedrückt durch die Quellwelle $b_s$ 1.1 und die Reflektionsfaktoren $\Gamma_S$ und $\Gamma_L$ 3.5, erhält man:

$$b_1 = \frac{b_s}{1 - \Gamma_S\Gamma'_L} \qquad \text{Gleichung 2}$$

$$a_1 = \frac{b_s\Gamma'_L}{1 - \Gamma_S\Gamma'_L} \qquad \text{Gleichung 3}$$

Für die ausgekoppelte hinlaufende Welle $b_3$ 3.1 und rücklaufende Welle $b_4$ 3.2 ergibt sich mit Hilfe der Gleichungen 2 und 3 und den Faktoren 3.6 bis 3.9 zur Modellierung des Kopplers 3:

$$b_3 = a'_K \frac{b_s}{1 - \Gamma_S\Gamma'_L} + a'_I \frac{b_s\Gamma'_L}{1 - \Gamma_S\Gamma'_L} \qquad \text{Gleichung 4}$$

$$b_4 = a''_I \frac{b_s}{1 - \Gamma_S\Gamma'_L} + a''_K \frac{b_s\Gamma'_L}{1 - \Gamma_S\Gamma'_L} \qquad \text{Gleichung 5}$$

Setzt man die hinlaufende Welle $b_3$ 3.1 und rücklaufende Welle $b_4$ 3.2 zueinander in Verhältnis, indem man die Größe $b_4$ durch die Größe $b_3$ dividiert, ergibt sich für den gemessenen Reflektionsfaktor $\Gamma_M$:

$$\Gamma_M = \frac{b_4}{b_3} = \frac{a''_I \frac{b_s}{1 - \Gamma_S\Gamma'_L} + a''_K \frac{b_s\Gamma'_L}{1 - \Gamma_S\Gamma'_L}}{a'_K \frac{b_s}{1 - \Gamma_S\Gamma'_L} + a'_I \frac{b_s\Gamma'_L}{1 - \Gamma_S\Gamma'_L}} = \frac{a''_K\Gamma'_L + a''_I}{a'_K + a'_I\Gamma'_L} \qquad \text{Gleichung 6}$$

Löst man die Gleichung 6 nach dem gesuchten Reflektionsfaktor am Ausgang des Kopplers $\Gamma'_L$ 3.5 auf, so erhält man:

$$\Gamma'_L = \frac{a'_K\Gamma_M - a''_I}{a''_K - a'_I\Gamma_M} \qquad \text{Gleichung 7}$$

Aus den Gleichungen 6 und 7 ist ersichtlich, dass der Quellreflektionsfaktor $\Gamma_S$ 1.1 des Leistungsverstärkers 1 keinen Einfluss auf den gemessenen Reflektionsfaktor $\Gamma_M$ hat. Dies wird dadurch deutlich, dass sich der gemessenen Reflektionsfaktor $\Gamma_M$ ohne den Quellreflektionsfaktor $\Gamma_S$ 1.1 ausdrücken lässt. Dies ist wichtig, da der Quellreflektionsfaktor $\Gamma_S$ 1.1 unbekannt ist und im Betrieb des Leistungsverstärkers 1 zusätzlich variieren kann, zum Beispiel in Abhängigkeit der Temperatur oder der Ausgangsleistung.

Weiterhin ist den Gleichungen zu entnehmen, dass der gemessene Reflektionsfaktor $\Gamma_M$ unabhängig von der Quellwelle $b_s$ 1.2 des Leistungsverstärkers 1 ist, das heißt Schwankungen der Sendeleistung beeinflussen den Reflektionsfaktor $\Gamma_M$ nicht. Sind die Kopplerparameter $a_K'$, $a_K''$, $a_I'$ und $a_I''$ 3.6 bis 3.9 bekannt, so kann aus dem gemessenen Reflektionsfaktor $\Gamma_M$ das gesuchte $\Gamma_L'$ berechnet werden.

Die Kopplerparameter 3.6 bis 3.9 können von Anordnung zu Anordnung variieren. Es kommt hier allerdings auch nicht darauf an, eine Lastimpedanz mit der Genauigkeit eines Netzwerkanalysators zu bestimmen. Vielmehr ist es ausreichend, eine gute Näherung nach Betrag und Phase für den Reflektionsfaktor $\Gamma_L'$ 3.5 zu erhalten. Die Genauigkeit lässt sich verbessern, wenn in der Fertigung eine zusätzliche Kalibrierung durchgeführt wird.

Anhand der Gleichung 7 kann der Reflektionsfaktor $\Gamma_L'$ 3.5 berechnet werden. In der praktischen Realisierung sollte es ausreichend sein, den Zusammenhang gemäß Gleichung 7 in

Form einer Look-Up-Tabelle in einer Schaltungsanordnung abzulegen. So kann beispielsweise der Betrag von $\Gamma_M$ in Schritten von 0.05 und die Phase mit einer Auflösung von 10 Grad in einer zweidimensionalen Tabelle hinterlegt werden. Im Betrieb können dann für die gemessene Amplitude und die gemessene Phase von $\Gamma_M$ die zugehörige Amplitude und Phase von $\Gamma_L'$ 3.5 ausgelesen werden.

Um Betrag und Phase der hinlaufenden Welle $b_3$ 3.1 und rücklaufenden Welle $b_4$ 3.2 zu bestimmen, ist eine Demodulation des Signals notwendig, das heißt es wird ein zusätzlicher Empfängerzweig benötigt. In Figur 1 ist der Empfängerzweig durch die Messeinrichtung für hinlaufende Welle 3.3 und die Messeinrichtung für rücklaufende Welle 3.4 dargestellt.

Aufgrund der fortschreitenden Integration ist dieser Mehraufwand der zwei Messeinrichtungen angesichts der zu erwartenden Verbesserung der Geräteperformance akzeptabel. Um den Aufwand zu reduzieren wird zusätzlich vorgeschlagen, anstatt zwei Empfänger nur einen Empfänger zu implementieren, der mit Hilfe eines Schalters auf die hinlaufende Welle $b_3$ 3.1 oder die rücklaufende Welle $b_4$ 3.2 umgeschaltet werden kann. Der jeweils nicht gemessene Pfad wird dabei reflektionsfrei abgeschlossen. Die hinlaufende Welle $b_3$ 3.1 und die rücklaufende Welle $b_4$ 3.2 werden somit nicht gleichzeitig gemessen, sondern nacheinander. Dies ist unkritisch, weil potentielle Laständerungen sehr viel langsamer erfolgen.

Der Empfänger kann zusätzlich zur Leistungsregelung genutzt werden. Somit ist eine Doppelnutzung möglich. Werden zukünftig Linearisierungsverfahren eingesetzt, so ist oftmals ein zusätzlicher Empfänger notwendig, der dann ohne großen Mehraufwand für die Bestimmung des Reflektionsfaktors genutzt werden kann.

In der Figur 2 wird nun eine besondere Ausführung einer Schaltungsanordnung zur Messung der Lastimpedanz am Ausgang eines Leistungsverstärkers dargestellt, die die zuvor beschriebene Bestimmung des Reflektionsfaktors ausnutzt.

Die Schaltungsanordnung besteht aus einem Leistungsverstärker 1, der am Ausgang verstärkte Signale an eine Antenne 10 ausgibt. Zwischen Antenne 10 und Leistungsverstärker 1 ist noch ein Frontendmodul 8 angeordnet, welches die TX- und RX-Pfade mit der Antenne 10 verbindet. Beispielhaft ist am Frontend 8 der Anschluss 9 zum ersten Empfänger dargestellt. An den ersten Empfänger werden die Signale weitergeleitet, die die Antenne 10 empfängt.

Der eigentliche Messzweig zur Bestimmung der Lastimpedanz nach Betrag und Phase befindet sich zwischen der schaltbaren Leistungsverstärkeranpassung 2 und dem Frontend 8 der Schaltungsanordnung. Mit Hilfe eines Kopplers 3 werden die hinlaufende Welle $b_3$ 3.1 und die rücklaufende Welle $b_4$ 3.2 ausgekoppelt und mit einem zweiten Empfänger 5 demoduliert. Um den Schaltungsaufwand zu reduzieren, befindet sich vor dem zweiten Empfänger 5 ein Schalter 4, der entweder den Pfad für die hinlaufende Welle $b_3$ 3.1 oder den Pfad für die rücklaufende Welle $b_4$ 3.2 zu dem Empfänger 5 durchschaltet. Im Empfänger 5 werden beide Signale kohärent demoduliert, um Amplitude und Phase der beiden Signale zu bestimmen. Da es nur auf das Verhältnis der beiden Größen ankommt, spielen eventuelle Skalierungsfehler in der Amplitude beziehungsweise eventuelle Phasenoffsets keine Rolle. Anschließend wird aus dem gemessenen Reflektionsfaktor der gesuchte Lastreflektionsfaktor gemäß Gleichung 7 in der Auswerteeinheit 6 berechnet beziehungsweise allgemein eine von dem Lastreflektionsfaktor abhängige Größe. Alternativ kann der Reflektionsfaktor, wie weiter oben erläutert, auch mit Hilfe einer Look-Up-Tabelle 7 bestimmt werden. Mit Hilfe der Kenntnis der momentanen Lastimpedanz des Leistungsverstärkers 1 kann über die schaltbare Leistungsverstärkeranpassung 2 die Lastimpedanz auf einen vorteilhaften Wert transformiert werden.

Dies setzt voraus, dass die Loadcharakteristik des Leistungsverstärkers 1 in bezug auf den jeweils zu optimierenden Parameter, wie Ausgangsleistung, Stromaufnahme oder auch ACLR bekannt ist. Eine diesbezügliche Charakterisierung des Leistungsverstärkers 1 kann dabei im Labor erfolgen und in geeigneter Form in der Schaltungsanordnung abgespeichert werden.

Die schaltbare Leistungsverstärkeranpassung 2 beschreibt eine konforme Abbildung. Durch die Leistungsverstärkeranpassung 2 wird die Lastimpedanz in den gewünschten Bereich des Smith-Chart (= Reflektionsfaktordiagramm) transformiert. Wohin die Lastimpedanz transformiert wird, hängt davon ab, welcher Parameter, zum Beispiel Stromaufnahme oder an die Lastimpedanz abgegebene Leistung, optimiert werden soll. Bei der schaltbaren Leistungsverstärkeranpassung 2 handelt es ich im allgemeinen um ein Post-Matching, das heißt die Schnittstelle zwischen Leistungsverstärker und schaltbaren Leistungsverstärkeranpassung 2 ist typischerweise eine 50 Ohm Schnittstelle.

Die eigentliche Anpassung, zum Beispiel bei GSM 900 von 1.5 Ohm am Transistorausgang auf typisch circa 50 Ohm, erfolgt im Leistungsverstärker 1 durch Elemente mit entsprechend hoher Güte, um die Verluste zu reduzieren. Durch diese Architektur wird zwar der durch die schaltbare Leistungsverstärkeranpassung abgedeckte Transformationsbereich eingeschränkt, gleichzeitig sind jedoch die Verluste durch die schaltenden Elemente im Matching weniger von Bedeutung.

Schaltbare Leistungsverstärkeranpassnetzwerke sind heute schon relativ einfach und kostengünstig mit PIN-Dioden realisierbar. Zukünftig werden durch neue Technologien, wie MEMS schaltbare Netzwerke sicherlich noch interessanter werden. Neben diskret schaltenden Netzwerken, zum Beispiel mit PIN-Dioden, sind auch Anpassnetzwerke mit einem oder mehreren analogen Eingängen denkbar, wo beispielsweise mit Hilfe von Varaktoren (Kapazitätsdioden) eine kontinuierliche Veränderung der Transformationscharakteristik innerhalb bestimmter Grenzen möglich ist.

Besonders hingewiesen sei an dieser Stelle nochmals auf den Einsatz in einem System mit nichtkonstanter Einhüllenden. In solchen Systemen ist die Nachbarkanalaussendung, bei ACLR bei UMTS, von Bedeutung und in der Regel sehr kritisch. Die Nachbarkanalleistung hängt dabei von Betrag und Phase der Lastimpedanz ab. Aufgrund der nach Betrag und Phase gemessenen Lastimpedanz kann somit durch einen bestimmten Schaltzustand des Leistungsverstärkermatchings die aktuelle Lastimpedanz in einen Bereich transformiert werden, wo der Leistungsverstärker 1 die geforderten Werte hinsichtlich Nachbarkanalleistung, zum Beispiel ACLR, einhält. Damit kann auf einen Isolator verzichtet werden.

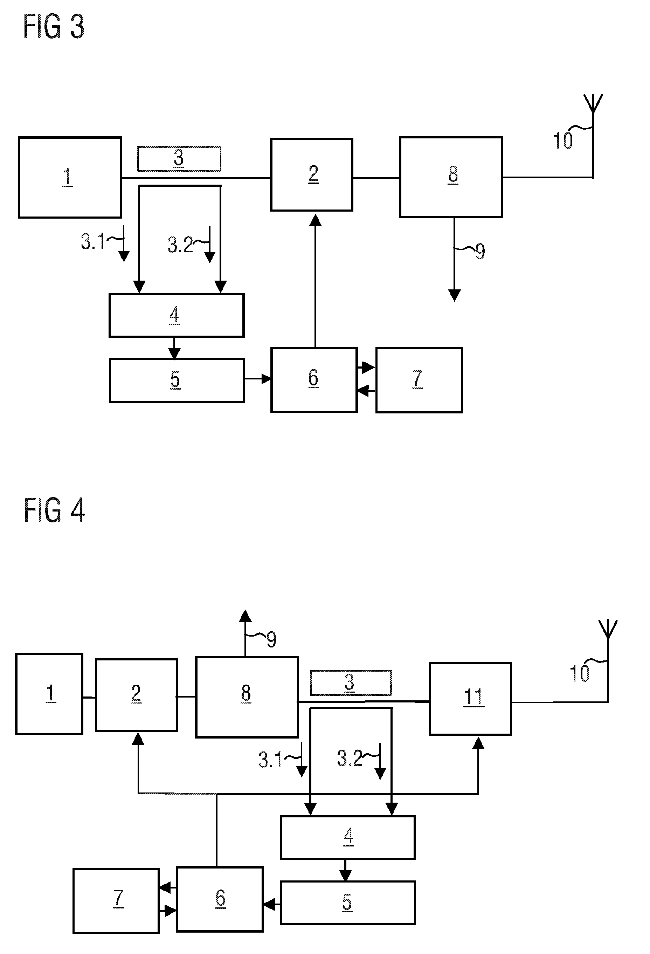

Die Figur 3 zeigt eine weitere Ausführung der neuen Schaltungsanordnung. Die Bestimmung der Lastimpedanz nach Betrag und Phase erfolgt analog zu der Schaltungsanordnung der Figur 2. Im Unterschied zu Figur 2 ist in dieser Schaltungsanordnung der Koppler 3 und die daran anschließende Messanordnung bestehend aus: Schalter 4, Empfänger 5, Auswerteeinheit 6 und Look-Up-Tabelle 7, zwischen dem Ausgang des Leistungsverstärkers 1 und der schaltbaren Leistungsverstärkeranpassung 2 angeordnet. Der Vorteil dieser Anordnung ist, dass die tatsächliche Lastimpedanz des Leistungsverstärkers, nachdem die Impedanz am Ausgang des Leistungsverstärkers durch das schaltbare Anpassnetzwerk 2 auf einen vorteilhaften Wert transformiert wurde, gemessen wird.

Die Figur 4 zeigt eine weitere besondere Ausführung der Schaltungsanordnung zur Messung der Lastimpedanz am Ausgang eines Leistungsverstärkers. In dieser Schaltungsanordnung ist der Koppler 3 und die daran anschließende Messanordnung bestehend aus: Schalter 4, Empfänger 5, Auswerteeinheit 6 und Look-Up-Tabelle 7, zwischen Frontend 8 und schaltbarere Antennenanpassung 11 angeordnet. Bei dieser besonderen Ausführung kann zusätzlich eine Anpassung der Antenne 10 über die schaltbare Antennenanpassung 11 durchgeführt werden. Eine solche Schaltungsarchitektur hat den Vorteil, dass hierdurch zusätzlich die Empfängerleistung verbessert werden kann. Die Messstelle befindet sich hinter dem Frontend 8. Zusätzlich ist es auch möglich, sowohl den Leitungsverstärker als auch Antennenanpassung zu verändern. Damit ergibt sich an Maximum an Flexibilität.

Insgesamt wird also durch die Erfindung, ein verbessertes Verfahren zum Betrieb eines Leistungsverstärkers in einem Mobilfunkendgerät und eine verbesserte Schaltungsanordnung eines Leistungsverstärkers in einem Mobilfunkendgerät zur Verfügung gestellt, durch das/die es möglich ist Parameter des Mobilfunkendgerätes, wie zum Beispiel die abgestrahlte Leistung oder die Stromaufnahme, in Abhängigkeit der momentanen Lastimpedanz am Ausgang des Leistungsverstärkers und auch unter Fehlanpassung der Antenne gezielt zu korrigieren.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Auflistung der verwendeten Abkürzungen:

ACLR     Adjacent Channel Leakage Ratio
ACP     Adjacent Channel Power
GMSK     Gaussian Minimum Shift Keying (GMSK-Modulation)
GSM     Global System for Mobile Communications (Mobilfunk)
HPSK     Hybrid Phase Shift Keying
LUT     Look-Up-Tabelle
MEMS     Micro Electrical Mechanical Switch
PA     Power Amplifier = Leistungsverstärker
PIN     Positiv Intrinsic Negativ

PSK      Phase Shift Keying (Phasenumtastung bei der Modulation)
RX       Receiver (Empfänger)
TX       Transmitter (Sender)
UMTS    Universal Mobile Telecommunications System
VSWR    Voltage Standing Wave Ratio

**Patentansprüche**

1.    Verfahren zum Betrieb eines Leistungsverstärkers (1) in einem Mobilfunkendgerät, bei dem der Leistungsverstärker (1) Signale (1.3) an ein Frontend (8) und eine Antenne (10) sendet, wobei bei Fehlanpassungen der Antenne (10) die Signale zumindest teilweise reflektiert (1.4) werden,
**dadurch gekennzeichnet,**
**dass** die gesendeten (1.3) und die reflektierten (1.4) Signale ausgekoppelt (3.1 und 3.2) und demoduliert werden und daraus die Lastimpedanz des Leistungsverstärkers nach Betrag und Phase bestimmt wird.

2.    Verfahren gemäß dem voranstehenden Patenanspruch 1,
**dadurch gekennzeichnet,**
**dass** die ausgekoppelten gesendeten (3.1) und die reflektierten (3.2) Signale nacheinander (3.1, 3.2 oder 3.2, 3.1) demoduliert werden, wobei der Pfad des gerade nicht zu demodulierenden Signals reflektionsfrei abgeschlossen wird.

3.    Verfahren gemäß einem der voranstehenden Patenansprüche 1 und 2,
**dadurch gekennzeichnet,**
**dass** die Lastimpedanz aus den ausgekoppelten gesendeten (3.1) und reflektierten (3.2) Signalen berechnet wird.

4.    Verfahren gemäß einem der voranstehenden Patenansprüche 1 und 2,
**dadurch gekennzeichnet,**
**dass** Signalwerte der ausgekoppelten gesendeten (3.1) und reflektierten (3.2) Signale mit tabellarisch hinterlegten Werten verglichen werden und dadurch die Lastimpedanz bestimmt wird.

5.    Verfahren gemäß einem der voranstehenden Patenansprüche 1 bis 4,
**dadurch gekennzeichnet,**
**dass** Parameter des Leistungsverstärkers (1) in Abhängigkeit der bestimmten oder berechneten Lastimpedanz angepasst werden.

6.    Verfahren gemäß dem voranstehenden Patenanspruch 5,
**dadurch gekennzeichnet,**
**dass** die Stromaufnahme, die abgestrahlte Leistung und die Nachbarkanalleistung des Leistungsverstärkers (1) in Abhängigkeit der bestimmten oder berechneten Lastimpedanz angepasst werden.

7.    Verfahren gemäß einem der voranstehenden Patenansprüche 1 bis 6,
**dadurch gekennzeichnet,**
**dass** Parameter der Antenne (10) in Abhängigkeit der bestimmten oder berechneten Lastimpedanz angepasst werden.

8.    Schaltungsanordnung eines Leistungsverstärkers (1) in einem Mobilfunkendgerät, mindestens bestehend aus einem Leistungsverstärker (1), einem Frontend (8) und einer Antenne (10), wobei das Frontend (8) und die Antenne (10) eine Lastimpedanz am Ausgang des Leistungsverstärkers (1) ergeben, ein Signalaustausch zwischen Leistungsverstärker (1) und Antenne (10) stattfindet und bei Fehlanpassungen der Antenne (10) die vom Leistungsverstärker (1) gesendeten Signale (1.3) von der Antenne (10) zumindest teilweise reflektiert (1.4) werden,
**dadurch gekennzeichnet,**
**dass** mindestens ein Koppler (3) zwischen Ausgang des Leistungsverstärkers (1) und Antenne (10) angeordnet ist, der die gesendeten (1.3) und die reflektierten (1.4) Signale ausgekoppelt und mindestens ein Mittel (3.3, 3.4 und 5) angeordnet ist, das eine Demodulation der ausgekoppelten Signale (3.1 und 3.2) durchführt, wodurch die Lastimpedanz oder eine damit zusammenhängende Größe nach Betrag und Phase bestimmt werden kann.

9.    Schaltungsanordnung gemäß dem voranstehenden Patenanspruch 8,

**dadurch gekennzeichnet,**
**dass** ein Empfänger (3.3) zur Demodulation der gesendeten (3.1) und ein Empfänger (3.4) zur Demodulation der reflektierten (3.2) Signale angeordnet ist.

10. Schaltungsanordnung gemäß einem der voranstehenden Patenanprüche 8 und 9,
**dadurch gekennzeichnet,**
**dass** vorzugsweise genau ein Empfänger (5) angeordnet ist und zwischen dem einen Empfänger (5) und dem Koppler (3) ein Schalter (4) angeordnet ist, der die ausgekoppelten gesendeten (3.1) und die reflektierten (3.2) Signale nacheinander an den Empfänger (5) weiterleitet, wobei der Pfad des gerade nicht zu demodulierenden Signals reflektionsfrei abgeschlossen wird.

11. Schaltungsanordnung gemäß einem der voranstehenden Patenanprüche 8 bis 10,
**dadurch gekennzeichnet,**
**dass** eine Auswerteeinheit (6) angeordnet ist, die die Lastimpedanz aus den ausgekoppelten gesendeten (3.1) und reflektierten (3.2) Signale berechnet.

12. Schaltungsanordnung gemäß einem der voranstehenden Patenanprüche 8 bis 10,
**dadurch gekennzeichnet,**
**dass** eine Look-Up-Tabelle (7) angeordnet ist, in der Werte hinterlegt sind, die mit den Signalwerten der ausgekoppelten gesendeten (3.1) und reflektierten (3.2) Signalen verglichen werden und dadurch die Lastimpedanz bestimmt wird.

13. Schaltungsanordnung gemäß einem der voranstehenden Patenanprüche 8 bis 12,
**dadurch gekennzeichnet,**
**dass** ein schaltbares Anpassnetzwerk (2) angeordnet ist, dass in Abhängigkeit der bestimmten oder berechneten Lastimpedanz, diese auf einen von der Leistungs-, Strom- oder ACLR-Impedanzcharakteristik des Leistungsverstärkers abhängigen vorteilhaften Wert transformiert.

14. Schaltungsanordnung gemäß dem voranstehenden Patenanspruch 13,
**dadurch gekennzeichnet,**
**dass** das schaltbare Anpassnetzwerk (2) die Stromaufnahme, die abgestrahlte Leistung und die Nachbarkanalleistung des Leistungsverstärkers (1) in Abhängigkeit der bestimmten oder berechneten Lastimpedanz anpasst.

15. Schaltungsanordnung gemäß einem der voranstehenden Patenanprüche 8 bis 14,
**dadurch gekennzeichnet,**
**dass** eine schaltbare Antennenanpassung (11) angeordnet ist, die die berechnete oder bestimmte Antennenimpedanz (10) auf einen von der Charakteristik des Leistungsverstärkers oder Empfängers abhängigen vorteilhaften Wert transformiert.

**FIG 1**

**FIG 2**

FIG 3

FIG 4